# EUROPEAN PATENT SPECIFICATION

(11) **EP 1 775 146 B1**
(45) Date of publication and mention of the grant of the patent: **06.05.2009**
(21) Application number: 06001133.5
(22) Date of filing: 19.01.2006
(51) Int. Cl.: B60C 23/04

(54) **Tire condition monitoring device**
Vorrichtung zur Reifenzustandsüberwachung
Dispositif de surveillance de condition de pneumatique

(30) Priority: 13.10.2005 JP 2005298443
(43) Date of publication of application: 18.04.2007
(73) Proprietor: Pacific Industrial Co., Ltd., Ogaki-shi, Gifu-ken 503-8603 (JP)
(72) Inventor: Katou, Michiya, Ogaki-shi Gifu-ken, 503-8603 (JP); Ibuka, Takashi, Ogaki-shi Gifu-ken, 503-8603 (JP)
(74) Representative: Kramer - Barske - Schmidtchen

(56) References cited:
- US-A- 3 588 815

## Description

This invention relates to a tire condition monitoring device detecting pneumatic pressure of a tire and executing wireless signaling to transmit results of the detection to a vehicle body.

Tire condition monitoring devices of the above-described type have conventionally been provided with an electric circuit to which electric power is supplied from a battery. The electric circuit includes a pressure sensor measuring pneumatic pressure of a tire. Results of measurement are transmitted to the vehicle body by radio. JP-A-2005-119370and US 3,588,815, disclose tire condition monitoring devices of the above-described type.

Vehicles have recently been sophisticated in functionality and consequently, the necessity of tire condition monitoring devices has been increased. With increase in the necessity, the tire condition monitoring device has been required to be improved in the reliability thereof with respect to signal noise.

Therefore, an object of the present invention is to provide a tire condition monitoring device which has higher reliability with respect to signal noise.

The present invention provides a tire condition monitoring device including an electric circuit further including a sensor detecting pneumatic pressure of a tire and a wireless circuit executing wireless signaling to transmit results of detection by the sensor, a DC power supply supplying power to the electric circuit, and a pair of power lines connecting the DC power supply and the electric circuit to each other, the tire condition monitoring device being mounted on a wheel with the tire in a vehicle and executing wireless signaling to a vehicle body, characterized by inductor elements connected to the paired power lines respectively.

The paired power lines connecting the DC power supply and the electric circuit are provided with the respective inductor elements. Consequently, noise received by the DC power supply serving as an antenna can be eliminated and accordingly, reliability with respect to signal noise can be improved as compared with the conventional tire condition monitoring devices.

In one form, the tire condition monitoring device further includes a circuit board having two sides. The inductor elements are mounted on either side of the circuit board and the electric circuit is mounted on both sides of the circuit board except for portions of either one side of the circuit board right behind the inductor elements mounted on the other side of the circuit board. The paired power lines are mounted on the second portions respectively.

The electric circuit is mounted on one side of the circuit board so as not to be located right behind the inductor elements mounted on the other side of the circuit board. Consequently, the electric circuit can be restrained from an adverse effect of noise produced by the inductor elements.

In another form, the inductor elements comprise a pair of chip beads respectively. Consequently, high-frequency noise can be eliminated.

The invention will be described, merely by way of example, with reference to the accompanying drawings, in which:
FIG. 1 is a diagram of a vehicle provided with the tire condition monitoring device in accordance with a first embodiment of the present invention;
FIG. 2 is a sectional side view of the tire condition monitoring device;
FIG. 3 is a circuit diagram showing an electrical arrangement of the tire condition monitoring device;
FIG. 4 is a perspective view of a button battery and a circuit board employed in the tire condition monitoring device;
FIG. 5 is a circuit diagram showing an electrical arrangement of the tire condition monitoring device of a second embodiment in accordance with the present invention;
FIG. 6 is a circuit diagram showing an electrical arrangement of the tire condition monitoring device of a third embodiment in accordance with the present invention; and

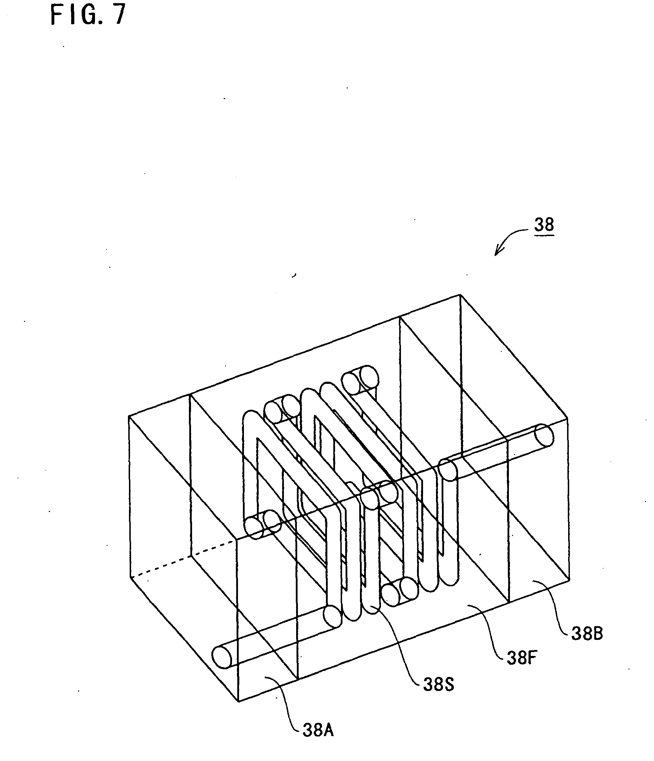

FIG. 7 is a perspective view of chip beads.

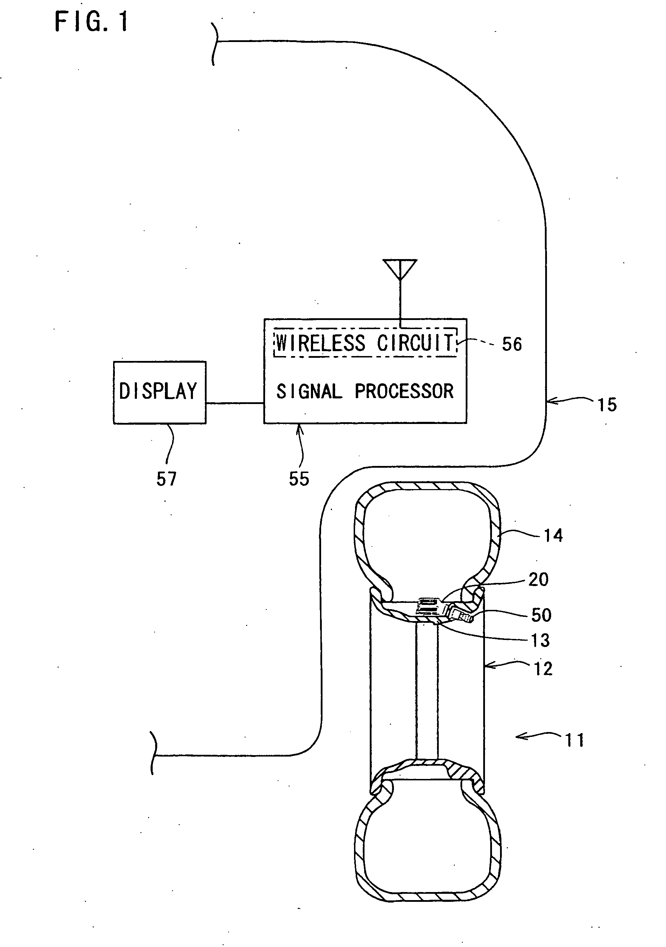

A first embodiment of the present invention will be described with reference to FIGS. 1 to 4. Referring to FIG. 1, a tire condition monitoring device 20 of the first embodiment is shown. The tire condition monitoring device 20 is provided integrally on a tire valve 50. Four tire condition monitoring devices 20 are fixed to four wheel assemblies 11 together with four tire valves 50 respectively though one of the wheel assemblies 11 is shown in FIG. 1. A tire 14 attached to each wheel assembly 11 has an inner circumferential opening closed by a rim 13 of a wheel 12, whereupon an interior of the tire 14 is closed.

The tire valve 50 is inserted through and fixed in a through hole (not shown) formed in a widthwise middle portion of the rim 13. The tire valve 50 has a distal end extending from the rim 13 to the opposite side of the vehicle body 15. The tire condition monitoring device 20 is provided integrally on a proximal end of the tire valve 50 and disposed in the interior of the tire 14. The tire valve 50 includes a core in which a valve core (not shown) is provided. The valve core prevents compressed air from being discharged through the tire valve 50 and allows compressed air to be charged into the tire 14 through the tire valve 50.

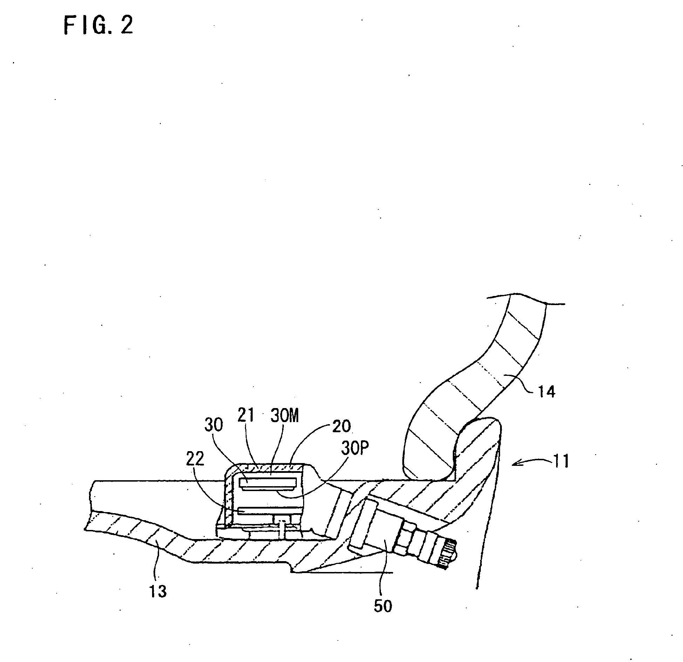

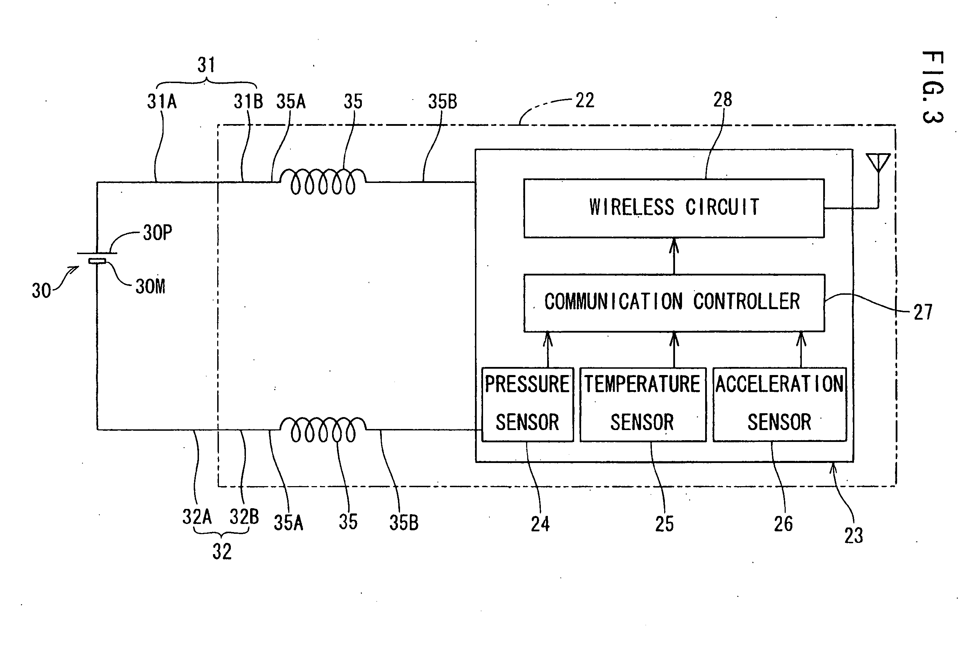

Referring to FIG. 2, the tire condition monitoring device 20 includes a case 21 formed integrally on the proximal end of the tire valve 50. A circuit board 22 and a button battery 30 are provided in the case 21. FIG. 3 shows an electric circuit 23 mounted on the circuit board 22. The electric circuit 23 includes a communication controller 27 to which are connected a pressure sensor 24, a temperature sensor 25, an acceleration sensor 26 and a wireless circuit 28. The communication controller 27 includes a ROM, a RAM and a CPU (not shown) . The ROM stores data of identification numbers assigned to the tire condition monitoring devices 20 and a predetermined program.

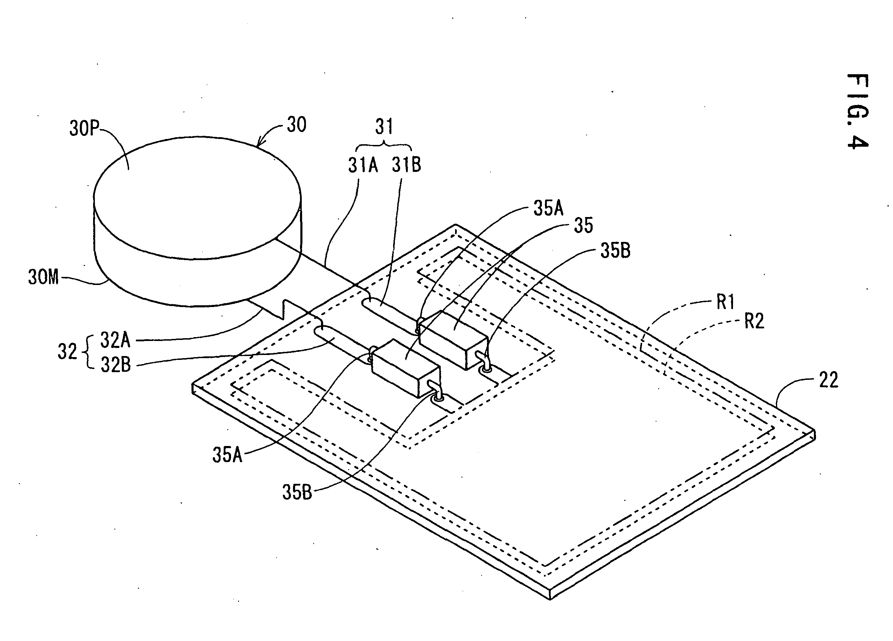

The button battery 30 has a diameter ranging from 20 to 25 mm. The button battery 30 is enclosed in a battery enclosure (not shown) provided on an inner surface of the case 21 (see FIG. 2). A pair of power lines 31A and 32A are connected to a positive electrode 30P and a negative electrode 30M of the button battery 30 respectively as shown in FIG. 4. A pair of electrical paths 31B and 32B through which electric power is supplied to the electric circuit 23 are printed on the circuit board 22. One power line 31A has an end soldered to the electrical path 31B, whereas the other power line 32A has an end soldered to the electrical path 32B, whereby a pair of power lines 31 and 32 are provided which connect the button battery 30 to the electric circuit 23.

Two choke coils 35 are connected in series to the electrical paths 31B and 32B of the power lines 31 and 32 respectively. More specifically, the electrical paths 31B and 32B are each cut in the middle and the choke coils 35 are connected to both cut ends of the electrical paths 31B and 32B respectively. Each choke coil 35 has a pair of terminals 35A and 35B inserted into terminal holes to be soldered respectively. Furthermore, the choke coils 35 are mounted on either one of two sides of the circuit board 22. On the other hand, the electric circuit 23 is mounted on both sides of the circuit board 22 except for portions of either one side of the circuit board 22 right behind the choke coils 35 mounted on the other side of the circuit board 22. In FIG. 4, regions of the circuit board 22 on which the electric circuit 23 is mounted are designated by symbols R1 and R2 respectively.

The tire condition monitoring device 20 is thus arranged as described above. A signal processor 55 as shown in FIG. 1 is provided in the vehicle body 15 so as to be capable of receiving signals from the tire condition monitoring device 20.

The tire condition monitoring device 20 will operate as follows. The tire condition monitoring device 20 is deactivated when the vehicle is stopped. When the vehicle starts to run, the acceleration sensor 26 is subjected to a centrifugal force due to revolution of the wheel assembly 11, thereby being activated to deliver an interrupt signal to the CPU of the communication controller 27. Then, the communication controller 27 carries out the predetermined program stored on the ROM. More specifically, a pressure and a temperature in the tire 14 are detected by the pressure sensor 24 and the temperature sensor 25. The wireless circuit 28 periodically executes wireless signaling to transmit results of detection to the signal processor 55 together with an identification number of the tire condition monitoring device 20. The signal processor 55 provided in the vehicle body 15 includes a wireless circuit 56, which receives radio signals transmitted by the wireless circuit 28. A display 57 provided in a vehicle compartment then displays information about conditions of the tire (tire pressure and temperature or occurrence of abnormal condition).

The tire condition monitoring device 20 inadvertently receives electromagnetic waves from a mobile telephone, a global positioning system (GPS), television or the like during running of the vehicle. The button battery 30 having the diameter ranging from 20 to 25 mm could be an antenna resonating electromagnetic wave having a frequency range of 1 to 2 GHz. In the embodiment, however, both power lines 31 and 32 are provided with the choke coils 35 respectively. Accordingly, each choke coil 35 has high impedance against high-frequency noise such as frequency range of 1 to 2 GHz, whereas impedance of each choke coil 35 is substantially zero against DC voltage fed from the button battery 30. Consequently, only the noise received by the button battery 30 is eliminated by the choke coils 35, whereupon electric power can stably be supplied from the button battery 30 to the electric circuit 23. More specifically, the tire condition monitoring device 20 can improve antinoise reliability as compared with the conventional devices. Furthermore, since the electric circuit 23 is mounted separately on both sides of the circuit board 22, the circuit board 22 can be compactified. Furthermore, the electric circuit 23 is mounted on both sides of the circuit board 22 except for first portions of either one side of the circuit board 22 located right behind or corresponding to second portions of the other side of the circuit board 22 on which the choke coils 35 are mounted. Consequently, an adverse effect of electromagnetic waves radiated from the choke coils 35 can be suppressed. Additionally, the paired power lines 31 and 32 are disposed in parallel with and close to each other as shown in FIG. 4. This arrangement of the power lines 31 and 32 renders production of normal mode noise more difficult.

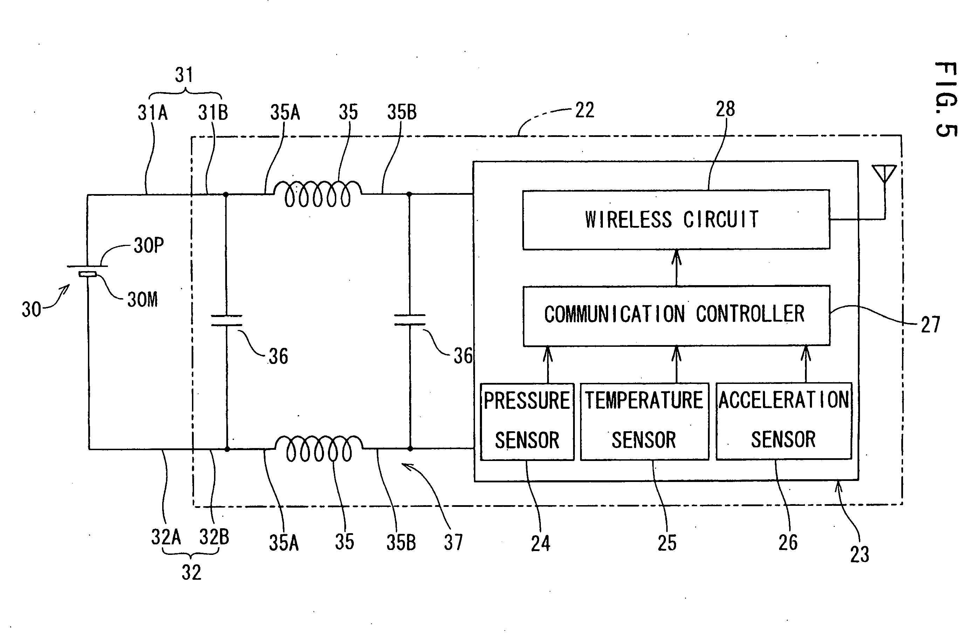

FIG. 5 illustrates a second embodiment of the invention. The second embodiment differs from the first embodiment in that a pair of capacitors 36 are parallel-connected between the power lines 31 and 32. The choke coils 35 are connected between the capacitors 36. The choke coils 35 and capacitors 36 constitute a normal mode choke 37. Normal mode noise transmitted to the power lines 31 and 32 can be eliminated by the normal mode choke 37.

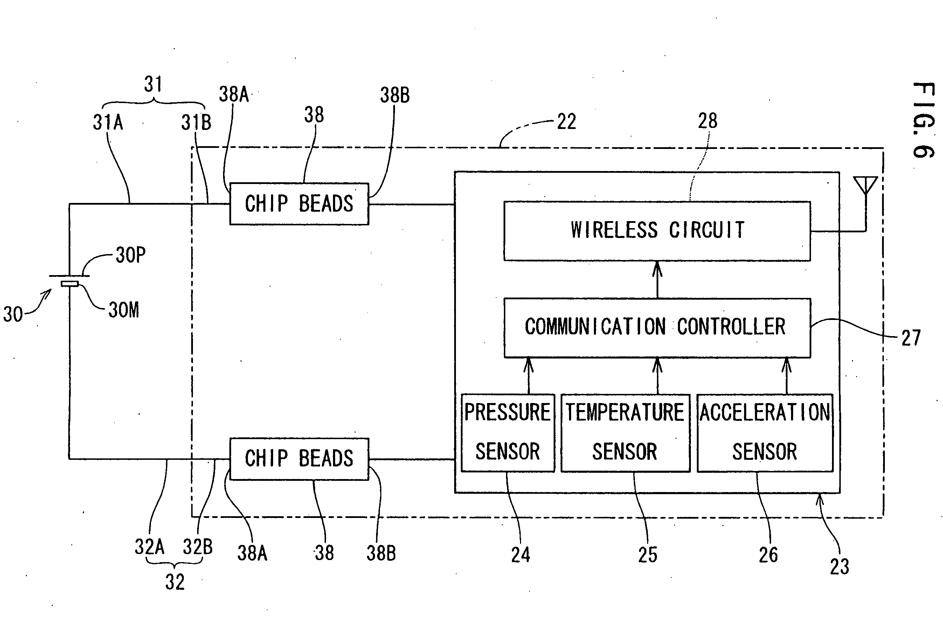

FIG. 6 illustrates a third embodiment of the invention. In the third embodiment, a pair of chip beads 38 are connected to the power lines 31 and 32, instead of the paired choke coils 36 employed in the first embodiment. Each chip bead 38 comprises a rectangular parallelepiped nickel ferrite member 38F and a silver electrode 38S embedded in the nickel ferrite member 38F. The silver electrode 38S is formed into the shape of a coil wound about a lengthwise axis of each chip bead 38. Furthermore, each chip bead 38 has both lengthwise ends provided with external electrodes 38A and 38B respectively. Both ends of the silver electrode 38S are connected to the external electrodes 38A and 38B respectively. As the result of the above-described arrangement, each chip bead 38 has a stray capacitance ranging from 0.05 to 0.2 pF. The chip beads 38 are mounted to intermediate portions of the power lines 31A and 32B, and the external electrodes 38A and 38B of each chip bead 38 are soldered to the power lines 31A and 32B respectively.

According to the third embodiment, the paired chip beads 38 each having a stray capacitance ranging from 0.05 to 0.2 pF are provided in the midst of the paired power lines 31 and 32. Consequently, noise whose frequency ranges from 1 to 2 GHz can be eliminated more reliably. Furthermore, the size of the tire condition monitoring device 20 can be reduced.

The present invention should not be limited by the foregoing embodiments. The following embodiments are within the technical scope of the present invention and can be practiced. Furthermore, the invention can be practiced in various modified forms without departing from the gist.
(1) The DC power supply for the electric circuit 23 should not be limited to the button battery 30. The DC power supply may be a cylindrically columnar battery, capacitor or the like.
(2) Noise may be eliminated by a ferrite ring core extending through the paired power lines 31 and 32, instead of the choke circuits 35 and the chip beads 38. Furthermore, resistors may be connected to the pair of power lines 31 and 32 for elimination of high-frequency noise.

## Claims

1. A tire condition monitoring device including an electric circuit (23) further including a sensor (24, 25) detecting pneumatic pressure of a tire (14) and a wireless circuit (28) executing wireless signaling to transmit results of detection by the sensor (24, 25), a DC power supply (30) supplying power to the electric circuit (23), and a pair of power lines (31, 32) connecting the DC power supply (30) and the electric circuit (23) to each other, the tire condition monitoring device being mounted on a wheel assembly (11) with the tire (14) in a vehicle and executing wireless signaling to a vehicle body (15), **characterized by** inductor elements (35, 38) connected to the paired power lines (31, 32) respectively.

2. The tire condition monitoring device according to claim 1, further **characterized by** a circuit board (22) having two sides, and in that the inductor elements (35, 38) are mounted on either side of the circuit board and the electric circuit is mounted on both sides of the circuit board (22) except for first portions of either one side of the circuit board (22) located right behind or corresponding to second portions of the other side of the circuit board (22) on which the inductor elements (35, 38) are mounted.

3. The tire condition monitoring device according to claim 1 or 2, **characterized in that** the inductor elements (35, 38) comprise a pair of choke coils (35) respectively.

4. The tire condition monitoring device according to claim 3, further **characterized by** a pair of capacitors (36) connecting the paired power lines (31, 32) to each other, and in that the capacitors (36) are connected to the paired choke coils (35) so that the choke coils (35) are interposed between the capacitors (36), whereby a normal mode choke (37) is provided.

5. The tire condition monitoring device according to claim 1 or 2, **characterized in that** the inductor elements (35, 38) comprise a pair of chip beads (38) respectively.

## Patentansprüche

1. Reifenzustandsüberwachungsvorrichtung, enthaltend einen Stromkreis (23), weiter enthaltend einen Sensor (24, 25), der einen Luftdruck eines Reifens (14) erfasst, und einen drahtlosen Schaltkreis (28), der eine drahtlose Signalgebung durchführt, um Erfassungsergebnisse des Sensors (24, 25) zu übermitteln, eine Gleichstromversorgung (30), die den Stromkreis (23) mit Strom versorgt, und ein Paar von Stromleitungen (31, 32), die die Gleichstromversorgung (30) und den Stromkreis (23) miteinander verbinden, wobei die Reifenzustandsüberwachungsvorrichtung an einer Reifenanordnung (11) mit dem Rad (14) in einem Fahrzeug angeordnet ist und drahtlose Signalgebung zu einer Fahrzeugkarosserie (15) durchführt, **gekennzeichnet durch** Induktionselemente (35, 38) die jeweils mit den gepaarten Stromleitungen (31, 32) verbunden sind.

2. Reifenzustandsüberwachungsvorrichtung nach Anspruch 1, weiter **gekennzeichnet durch** eine Schaltplatte (22) mit zwei Seiten, und **dadurch**, dass die Induktionselemente (35, 38) auf einer der Seiten der Schaltplatte befestigt sind, und der Stromkreis auf beiden Seiten der Schaltplatte (22) befestigt ist, mit Ausnahme von ersten Bereichen einer der Seiten der Schaltplatte (22), die sich genau hinter zweiten Bereichen der anderen Seite der Schaltplatte (22) befinden, auf der die Induktionselemente (35, 38) befestigt sind, oder diesen entsprechen.

3. Reifenzustandsüberwachungsvorrichtung nach Anspruch 1 oder 2, **dadurch gekennzeichnet, dass** die Induktionselemente (35, 38) ein jeweils ein Paar von Drosselspulen (35) enthalten.

4. Reifenzustandsüberwachungsvorrichtung nach Anspruch 3, weiter **gekennzeichnet durch** ein Paar von Kondensatoren (36), die die gepaarten Stromleitungen (31, 32) miteinander verbinden, und **dadurch**, dass die Kondensatoren (36) mit den gepaarten Drosselspulen (35) so verbunden sind, dass die Drosselspulen (35) zwischen den Kondensatoren (36) angeordnet sind, wodurch eine Normalbetrieb-Drossel (37) bereitgestellt wird.

5. Reifenzustandsüberwachungsvorrichtung nach Anspruch 1 oder 2, **dadurch gekennzeichnet, dass** die Induktionselemente (35, 38) jeweils ein Paar von Chip Beads (38) enthalten.

## Revendications

1. Dispositif de contrôle de l'état du pneu doté d'un circuit électrique (23) comprenant par ailleurs un capteur (24, 25) détectant la pression pneumatique d'un pneu (14) et un circuit sans fil (28) exécutant la transmission sans fil d'un signal pour transmettre les résultats de la détection par le capteur (24, 25), une alimentation électrique CC (30) apportant l'électricité au circuit électrique (23) et une paire de lignes électriques (31, 32) raccordant l'alimentation électrique CC (30) et le circuit électrique (23) l'un à l'autre, le dispositif de contrôle de l'état du pneu étant monté sur un ensemble de roues (11) avec le pneu (14) dans un véhicule et l'exécution d'une transmission de signal sans fil à un châssis de véhicule (15), **caractérisé par** des éléments inducteurs (35, 38) raccordés respectivement aux lignes électriques (31, 32) par paire.

2. Dispositif de contrôle de l'état du pneu selon la revendication 1, **caractérisé par** une carte à circuits imprimés (22) possédant deux faces dans laquelle sont montés les éléments inducteurs (35, 38) de part et d'autre de la carte à circuits imprimés et le circuit électrique est monté de part et d'autre de la carte à circuits imprimés (22) sauf pour les premières parties de chaque face de la carte à circuits imprimés (22) situées juste derrière ou correspondant aux deuxièmes portions de l'autre face de la carte à circuits imprimés (22) sur laquelle sont montés les éléments inducteurs (35, 38).

3. Dispositif de contrôle de l'état du pneu selon l'une des revendications 1 ou 2, **caractérisé en ce que** les éléments inducteurs (35, 38) comprennent respectivement une paire de bobines d'induction (35).

4. Dispositif de contrôle de l'état du pneu selon la revendication 3, **caractérisé par** ailleurs par une paire de condensateurs (36) raccordant les lignes électriques par paire (31, 32) l'une à l'autre et en ce que les condensateurs (36) sont raccordés aux bobines d'inductance par paire (35) de telle sorte que les bobines d'inductance (35) soient interposées entre les condensateurs (36), une inductance en mode normal (37) étant fournie.

5. Dispositif de contrôle de l'état du pneu selon l'une des revendications 1 ou 2, **caractérisé en ce que** les éléments inducteurs (35, 38) comprennent respectivement une paire de chip beads (38).
